# EUROPEAN PATENT APPLICATION

(11) **EP 1 148 435 A1**
(43) Date of publication of application: **24.10.2001**
(21) Application number: 01109694.8
(22) Date of filing: 19.04.2001
(51) Int. Cl.: G06F 17/60

(54) **Network-based sales system using bar codes and operating method of the same**

(30) Priority: 19.04.2000 JP 2000117653
(71) Applicant: NEC CORPORATION, Tokyo (JP)
(72) Inventor: Usui, Yuuji, Minato-ku, Tokyo (JP)
(74) Representative: Betten & Resch

(57) **Abstract**

A network-based sales system is composed of a merchant computer (2) and a defining unit (5, 6, 7). The merchant computer (2) sends an order of a product. The defining unit (5, 6, 7) defines a bar code of the product in response to the order.

## Description

### Background of the Invention

### 1. Field of the Invention

The present invention relates to a network-based sales system. More particularly, the present invention relates to a network-based sales system for defining bar codes of products and thereby managing distribution of the products.

### 2. Description of the Related Art

Improvement of a product distributing system has been promoted for selling a large number of various products. To make the product distribution effective, each of the products is given an article number and a bar code corresponding to the article number. The bar code is printed on a package box or a slip of the product and used for managing the distribution of the product.

The number of the article numbers and the corresponding bar codes are increasing because of the increasing variety of products. The increase of the variety of products arises from the diversification of user need. As for a personal computer, for example, a capacity of an installation memory, a capacity of a hard disc, an installation OS and an application are variously combined. Thousands of combinations are theoretically possible in only one machine.

The increase of the number of the article numbers and the corresponding bar codes imposes a heavy load on an EDP (Electronic Data Processing) system of the makers and the merchants. The heavy load forces the makers and the merchants to reduce the number of products. The reduction causes loss of sales chances for the makers and the merchants, and also causes inconvenience of narrower product selection ranges for the users.

Also, the increase of the number should be suppressed, because the number of assigned bar codes is limited for a maker and a merchant. The bar codes are definitely assigned to each of the makers or the merchants. If enormous bar codes are given in advance to the products, the bar code given to a product having no order may be in vain.

It is desirable that the bar codes are effectively used by the makers and the merchants.

### Summary of the Invention

Therefore, the object of the present invention is to provide a network-based sales system in which the bar codes are effectively used.

In order to achieve an aspect of the present invention, a network-based sales system is composed of a merchant computer, a defining unit, and a distribution managing computer. The merchant computer sends an order of a product. The defining unit defines a bar code of the product in response to the order, and notifies the distribution managing computer of the bar code. The distribution managing computer manages distribution of the product based on the bar code.

In order to achieve another aspect of the present invention, a network-based sales system is composed of a merchant computer, a defining unit, and a production managing computer. The merchant computer sends an order of a product. The defining unit defines a bar code of the product in response to the order, and notifies the production managing computer of the bar code.

In order to achieve still another aspect of the present invention, a network-based sales system is composed of a merchant computer, a defining unit, and an EDP system. The merchant computer sends an order of a product. The defining unit defines a bar code of the product in response to the order, and notifies the EDP system of the bar code. The EDP system manages stock of a merchant based on the bar code.

In order to achieve still another aspect of the present invention, a network-based sales system is composed of a merchant computer sending an order of a product, a defining unit; a formal product master database to which registered bar codes for formally-registered products are registered. The defining unit accesses the formal product master database in response to the order to see if a product bar code for the product is registered as one of the registered bar codes. The defining unit defines the product bar code of the product to register the product bar code into the formal product master database as one of the registered bar codes when the product bar code for the product is not registered as one of the registered bar codes.

The network-based sales system may be further composed of a distribution managing computer. In this case, the defining unit notifies the distribution managing computer of the product bar code, and the distribution managing computer manages distribution of the product based on the product bar code.

The network-based sales system may be further composed of a production managing computer. In this case, the defining unit notifies the production managing computer of the production bar code, and the production managing computer manages production of the product based on the product bar code.

The network-based sales system may be further composed of an EDP system. In this case, the defining notifies the EDP system of the product bar code, and the EDP system manages stock of a merchant based on the product bar code.

It is desirable that the network-based sales system is further composed of a tentative product master database having tentative product data concerning tentatively-registered products. In this case, the defining unit extracts formal product data concerning the product from the tentative product master database to register the formal product data to the formal product master database when the product is registered as one of the tentatively-registered products.

In this case, the tentative product data desirably includes prices of the tentatively-registered products. In this case, the formal product data includes a price of the product.

Also, the network-based sales system may be further composed of a distribution managing computer. In this case, the defining unit notifies the distribution managing computer of the product bar code and the formal product data, and the distribution managing computer manages distribution of the product based on the product bar code and the formal product data.

Also, the network-based sales system may be further composed of a production managing computer. In this case, the defining unit notifies the production managing computer of the production bar code and the formal product data, and the production managing computer manages production of the product based on the product bar code and the formal product data.

Also, the network-based sales system may be further composed of an EDP system. In this case, the defining notifies the EDP system of the product bar code and the formal product data, and the EDP system manages stock of a merchant based on the product bar code and the formal product data.

In order to achieve still another aspect of the present invention, a network-based bar code defining system is composed of an order receiving unit receiving an order of a product through a computer network and a defining unit defining a bar code of the product in response to the order.

In order to achieve still another aspect of the present invention, a network-based sales method is composed of:
sending an order of a product through a computer network;
defining a bar code of the product in response to the order; and
managing distribution of the product based on the bar code.

In order to achieve still another aspect of the present invention, a network-based sales method is composed of:
sending an order of a product through a computer network;
defining a bar code of the product in response to the order; and
managing production of the product based on the bar code.

In order to achieve still another aspect of the present invention, a network-based sales method is composed of:
sending an order of a product through a computer network;
defining a bar code of the product in response to the order; and
managing stock of a merchant based on the bar code.

In order to achieve still another aspect of the present invention, a network-based sales method is composed of:
providing a formal product master database to which registered bar codes for formally-registered products are registered;
sending an order of a product;
accessing the formal product master database in response to the order to see if a product bar code for the product is registered as one of the registered bar codes;
defining the product bar code of the product to register the product bar code into the formal product master database as one of the registered bar codes when the product bar code for the product is not registered as one of the registered bar codes.

In order to achieve still another aspect of the present invention, a network-based method of defining a bar code of a product is composed of:
receiving an order of a product through a computer network;
defining a bar code of the product in response to the order.

### Brief Description of the Drawings

Fig. 1 shows a configuration of a network-based sales system according to an embodiment of the present invention; and
Fig. 2 shows a process of operating the network-based sales system.

### Description of the Preferred Embodiments

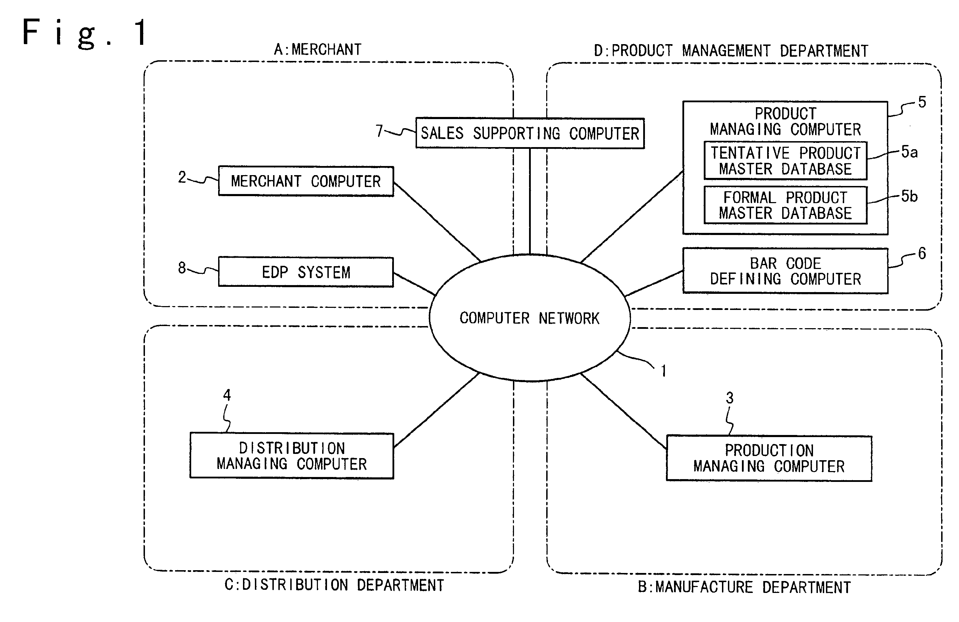

With reference to Fig. 1, a network-based sales system according to the present invention includes a computer network 1, a merchant computer 2, a production managing computer 3, a distribution managing computer 4, a product managing computer 5, a bar code defining computer 6, a sales supporting computer 7, and an EDP system 8.

The merchant computer 2 is provided for operation by a merchant A. The merchant computer 2 sends an order request of a product in accordance with the purchaser's willing.

The production managing computer 3 is provided for operation by a manufacturing department B. The production managing computer 3 manages the manufacture of the products.

The distribution managing computer 4 is provided for operation by a distribution department C. The distribution managing computer 4 manages the distribution of the products.

The product managing computer 5 is provided for operation by a product managing department D. The product managing computer 5 includes a tentative product master database 5a and a formal product master database 5b. Product data such as article numbers and prices of the products are registered into the tentative product master database 5a. The formal product master database 5b is produced based on the tentative product master database 5a as mentioned below.

The bar code defining computer 6 is provided for operation by the product managing department D. The bar code defining computer 6 respectively defines bar codes for the article numbers. The bar codes respectively correspond to the article numbers. The defined bar codes are registered into the formal product master database 5b.

The sales supporting computer 7 is shared by the merchant A and the product managing department D. The sales supporting computer 7 supports an order reception management and an appointed delivery answer of the product for the order from the merchant computer 2.

The EDP system 8 is provided for operation by the merchant A. The EDP system 8 manages the stock of the merchant A.

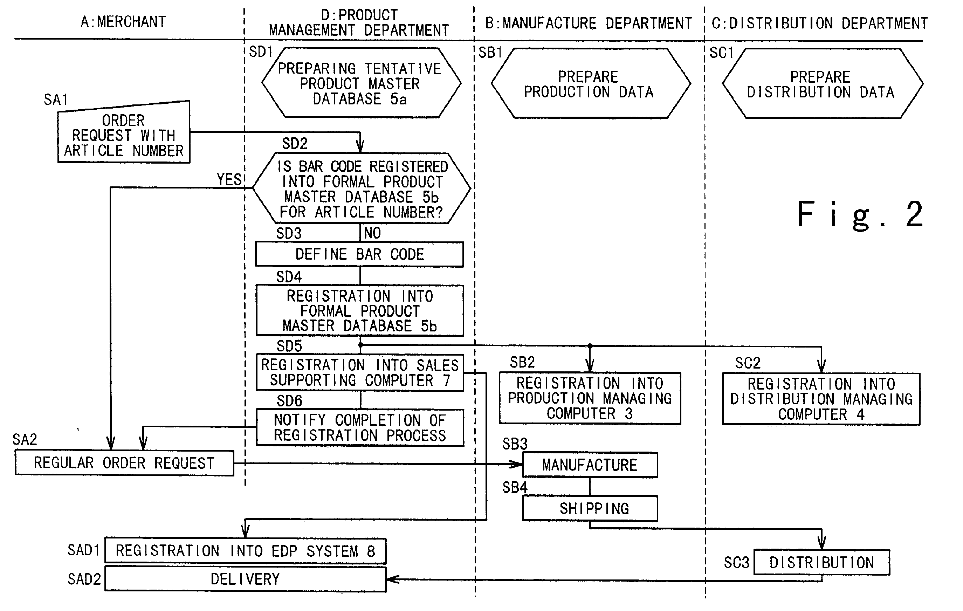

Fig. 2 shows the operation of the network-based sales system.

Various data concerning the products are initially prepared for the production managing computer 3, the distribution managing computer 4, and the product managing computer 5 (Step SB1, SC1, and SD1). Manufacture data needed for manufacturing the products are provided for the production managing computer 3, such as article numbers of the products and preparation numbers of parts included in the products (Step SB1). Also, distribution data needed for distribution of the products are provided for the distribution managing computer 4, such as the article numbers and distribution numbers of the products (Step SC1). Furthermore, the tentative product master database 5a is provided for the product managing computer 5 (Step SD1). As mentioned above, the product master database 5a records the product data including the article numbers and the prices of the products.

At the steps SB1, SC1, and SD1, no bar code is initially registered into the production managing computer 3, the distribution managing computer 4, and the product managing computer 5. The formal product master database 5b initially records no bar code.

The merchant computer 2 sends an order request to the sales supporting computer 7 (Step SA1). The merchant A inputs to the merchant computer 2 an article number of a product that the merchant A is willing to order. The order request includes the article number of the ordered product.

The sales supporting computer 7 accesses the product master database 5a to see if a bar code corresponding to the article number is already registered into the formal product master database 5b (Step SD2). If the code corresponding to the article number is not yet defined, the bar code is not registered.

When the corresponding bar code 13 is not yet registered, the sales supporting computer 7 accesses the bar code defining computer 6 to send the article number. The bar code defining computer 6 defines a new bar code for the article number (Step SD3). The bar code defining computer 6 sends the article number and the defined bar code to the product managing computer 5. The product managing computer 5 queries the tentative product master database 5a based on the article number. When the article number is registered into the tentative product master database 5a, the product managing computer 5 extracts product data concerning the product having the article number from the tentative product master database 5a. The product managing computer 5 registers the article number, the defined bar code and the extracted product data into the formal produce master database 5b (Step SD4).

The registered article number, bar code, and product data are sent to the production managing computer 3, the distribution managing computer 4, the sales supporting computer 7. The registered article number, bar code, and product data are also registered into each of the production managing computer 3, the distribution managing computer 4, the sales supporting computer 7 (Step SB2, SC2, and SD5). The registration process for the product is finished.

After the registration process, the sales supporting computer 7 sends a registration report informing the registration completion to the merchant computer 2. The merchant A notices that a regular order of the product can be proceeded (Step SD6). The merchant computer 2 sends a regular order request of the product (Step SA2).

At the Step SD2, when the bar code corresponding to the article number included the order request is already registered into the formal product master database 5b, the above-mentioned Steps SD3, SD4, SD5, SD6, SB2, and SC2 are skipped. In this case, the order request sent by the merchant computer 2 is regarded as the regular order request (Step SA2).

The production managing computer 3 receives the regular order request from the merchant computer 2. The manufacturing department B manufactures the product in accordance with the regular order request (Step SB3). The bar code registered in the production managing computer 3 is used for the production management executed by the production managing computer 3.

The manufactured product is shipped after the bar code of the product is printed on a package box or a slip affixed on a package box (Step SB4). The distribution department C distributes the product in accordance with the printed bar code (Step SC3). The distribution managing computer 4 manages the distribution of the product with the printed bar code and also the bar code registered into the distribution managing computer 4 itself.

The merchant A delivers the product at a moderate timing (Step SAD2). The delivery is managed by the EDP system 8. The merchant A is provided with the product data including the article number, price, and the defined bar code of the product and the product data is registered into the EDP system 8 (Step SAD1). The EDP system 8 executes stock management of the merchant A with the registered product data.

The above-mentioned operation realizes the effective use of the limited number of bar codes. That enables the usage of the EDP system to be actually effective for the makers and the merchants.

In the above-mentioned operation, the product data including the prices and the article numbers are preliminarily prepared for the tentative product master database 5a. The preliminary preparation of those data requires the large number of steps. In order to reduce the number of such steps, it is desirable to reduce the preliminary preparation to the minimum. The registering method is effective for individually registering the article data after the reception of the order request. Such a registering method has a disadvantage that it takes a certain time to actually order the article after the reception of the order request. However, the advantage of using the conventional EDP system and treating the various kinds of articles offsets and outweighs the disadvantage.

## Claims

1. A network-based sales system comprising:
a merchant computer (2) sending an order of a product; and
a defining unit (5, 6, 7), wherein said defining unit (5, 6, 7) defines a bar code of said product in response to said order.

2. The network-based sales system according to claim 1, further comprising a distribution managing computer (4), wherein said defining unit (5, 6, 7) notifies said distribution managing computer (4) of said bar code, and wherein
said distribution managing computer (4) manages distribution of said product based on said bar code.

3. A network-based sales system according to claim 1 or 2, further comprising a production managing computer (3), wherein said defining unit (5, 6, 7) notifies said production managing computer (3) of said bar code, and wherein
said production managing computer (3) manages production of said product based on said bar code.

4. The network-based sales system according to claim 1, 2 or 3, further comprising an EDP (Electronic Data Processing) system (8), wherein said defining unit (5, 6, 7) notifies said EDP system (8) of said bar code, and said EDP system (8) manages stock of a merchant based on said bar code.

5. A network-based sales system according to one of claims 1 to 4, further comprising a formal product master database (5b) to which registered bar codes for formally-registered products are registered, wherein said defining unit (5, 6, 7) accesses said formal product master database (5b) in response to said order to see if a product bar code for said product is registered as one of said registered bar codes, and defines said product bar code of said product to register said product bar code into said formal product master database (5b) as one of said registered bar codes when said product bar code for said product is not registered as one of said registered bar codes.

6. The network-based sales system according to claim 5, further comprising a distribution managing computer (4), wherein said defining unit (5, 6, 7) notifies said distribution managing computer (4) of said product bar code, and said distribution managing computer (4) manages distribution of said product based on said product bar code.

7. The network-based sales system according to claim 5 or 6, further comprising a production managing computer (3), wherein said defining unit (5, 6, 7) notifies said production managing computer (3) of said production bar code, and said production managing computer (3) manages production of said product based on said product bar code.

8. The network-based sales system according to one of claims 5 to 7, further comprising an EDP system (8), wherein said defining unit notifies said EDP system (8) of said product bar code, and said EDP system (8) manages stock of a merchant based on said product bar code.

9. The network-based sales system according to one of claims 5 to 8, further comprising:
a tentative product master database (5a) having tentative product data concerning tentatively-registered products, wherein said defining unit (5, 6, 7) extracts formal product data concerning said product from said tentative product master database (5a) to register said formal product data to said formal product master database (5b) when said product is registered as one of said tentatively-registered products.

10. The network-based sales system according to claim 9, wherein said tentative product data comprises prices of said tentatively registered products, and said formal product data comprises a price of said product.

11. The network-based sales system according to claim 9 or 10, further comprising a distribution managing computer (4), wherein said defining unit (5, 6, 7) notifies said distribution managing computer (4) of said product bar code and said formal product data, and said distribution managing computer (4) manages distribution of said product based on said product bar code and said formal product data.

12. The network-based sales system according to one of claims 9 to 11, further comprising a production managing computer (3), wherein said defining unit (5, 6, 7) notifies said production managing computer (3) of said production bar code and said formal product data, and said production managing computer (3) manages production of said product based on said product bar code and said formal product data.

13. The network-based sales system according to one of claims 9 to 12, further comprising an EDP system (8), wherein said defining unit notifies said EDP system (8) of said product bar code and said formal product data, and said EDP system (8) manages stock of a merchant based on said product bar code and said formal product data.

14. A network-based bar code defining system comprising:
an order receiving unit receiving an order of a product through a computer network;
a defining unit (5, 6, 7) defining a bar code of said product in response to said order.

15. A network-based sales method comprising:
sending an order of a product through a computer network;
defining a bar code of said product in response to said order.

16. A network-based sales method according to claim 15, further comprising:
managing distribution of said product based on said bar code.

17. A network-based sales method according to claim 15 or 16, further comprising:
managing production of said product based on said bar code.

18. A network-based sales method according to claim 15, 16 or 17, further comprising:
managing stock of a merchant based on said bar code.

19. A network-based sales method according to one of claims 15 to 18, further comprising:
providing a formal product master database (5b) to which registered bar codes for formally-registered products are registered; and
accessing said formal product master database (5b) in response to said order to see if a product bar code for said product is registered as one of said registered bar codes, wherein said defining includes:
defining said product bar code of said product to register said product bar code into said formal product master database (5b) as one of said registered bar codes when said product bar code for said product is not registered as one of said registered bar codes.

20. A network-based method of defining a bar code of a product, comprising:
receiving an order of a product through a computer network;
defining a bar code of said product in response to said order.
